(19) Europäisches Patentamt
European Patent Office
Office européen des brevets

(11) **EP 3 453 509 B1**

(12) **EUROPÄISCHE PATENTSCHRIFT**

(45) Veröffentlichungstag und Bekanntmachung des Hinweises auf die Patenterteilung:
**23.09.2020  Patentblatt 2020/39**

(21) Anmeldenummer: **18000650.4**

(22) Anmeldetag: **03.08.2018**

(51) Int Cl.:
*B29B 7/90* (2006.01)      *B29B 9/00* (2006.01)
*B29B 9/14* (2006.01)      *B29B 9/16* (2006.01)
*B29C 44/34* (2006.01)      B29K 67/00 (2006.01)
B29K 105/04 (2006.01)      B29K 105/06 (2006.01)
B29L 31/34 (2006.01)      B29K 105/00 (2006.01)
B29K 105/12 (2006.01)      B29K 105/26 (2006.01)
B29K 509/08 (2006.01)      H02G 9/10 (2006.01)
B29C 44/42 (2006.01)      B29C 45/00 (2006.01)

(54) **VERFAHREN ZUR HERSTELLUNG VON GESCHÄUMTEN GROSSBAUTEILEN**

DEVICE FOR MANUFACTURING FOAMED LARGE-SCALE COMPONENTS

PROCÉDÉ DE FABRICATION DE COMPOSANT DE GRANDE TAILLE EXPANSÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.09.2017  DE 102017008354**

(43) Veröffentlichungstag der Anmeldung:
**13.03.2019  Patentblatt 2019/11**

(73) Patentinhaber: **Langmatz GmbH**
**82467 Garmisch-Partenkirchen (DE)**

(72) Erfinder:
• **Hutter, Michael**
**82497 Unterammergau (DE)**
• **Fischer, Kai**
**82481 Mittenwald (DE)**
• **Ostendorf, Jürgen**
**82467 Garmisch-Partenkirchen (DE)**

(74) Vertreter: **Flosdorff, Jürgen**
**Huss, Flosdorff & Partner GbR**
**Klarweinstraße 39**
**82467 Garmisch-Partenkirchen (DE)**

(56) Entgegenhaltungen:
WO-A1-2017/037621      CN-A- 101 280 095
CN-A- 103 333 471      DE-A1-102012 001 108
US-A1- 2004 192 812      US-A1- 2016 008 671
US-A1- 2017 043 503

**Beschreibung**

Die Erfindung betrifft ein Verfahren zur Herstellung von vorzugsweise komplexen, geschäumten Großbauteilen, bei denen es sich bevorzugt um Kabelschächte handelt. Das Verfahren ist aber auch zur Herstellung anderer Großbauteile wie z.B. Kabelverteilerschränke geeignet.

Es ist bekannt, Großbauteile wie Kabelschächte durch Spritzgießen von PA (Polyamid) herzustellen. Dieses Material ist verhältnismäßig teuer, und die Zykluszeiten bei der Herstellung eines Großbauteils sind verhältnismäßig groß.

Es ist auch bekannt, zum Beispiel Polyamid für das Schaumguß-Verfahren physikalisch zu schäumen, indem Luftbläschen beim Spritzvorgang in den Massestrom injiziert werden. Ein Nachteil dieser Vorgehensweise besteht darin, dass die Luftbläschen in dem Formwerkzeug ungleichmäßig in dem aufgeschäumten Polyamid verteilt sind, und dass das Schussgewicht bei diesem Verfahren derzeit auf ca. 8 kg begrenzt ist.

CN 101280095 A offenbart ein Verfahren zur Herstellung von komplexen Großbauteilen, das folgende Schritte enthält:

    a) Herstellen eines homogenen Granulats durch Mischen von PET mit Glasfasern in einer Compoundier-Maschine;
    b) Trocknen des Granulats auf eine Restfeuchte $\leq$ 0,003 %;
    c) Zuführen des Granulats in eine Spritzgussmaschine;
    d) Spritzgießen des der Spritzgussmaschine zugeführten Materials in ein Formwerkzeug.

Die Druckschrift offenbart nicht, dass bei Schritt c) ein chemisches Treibmittel mit dem Granulat in die Spritzgussmaschine zugeführt wird, so dass sie nicht die Herstellung von geschäumten Großbauteilen offenbart. Die Verwendung von PET plus Treibmittel in einer Spritzgussmaschine ist jedoch aus der WO 2017/037621 A1 bekannt.

Der vorliegenden Erfindung liegt die Aufgabe zugrunde, ein Verfahren zur Herstellung von vorzugsweise komplexen, geschäumten Großbauteilen anzugeben, bei dem die obigen Nachteile vermieden sind.

Diese Aufgabe wird erfindungsgemäß durch die Merkmale des Patentanspruchs 1 gelöst.

Vorteilhafte Ausgestaltungen des Verfahrens sind in den Unteransprüchen gekennzeichnet.

Die Erfindung sieht vor, dass PET (Polyethylenterephtalat) für die Herstellung verwendet wird. Dabei wird vorzugsweise recyceltes PET verwendet, wodurch das Verfahren besonders umweltfreundlich wird. Mit großem Vorteil wird das PET bei der Wiederaufbereitung rekristallisiert, so dass es sich um ein teilkristallines PET handelt, das bei dem Spritzgußprozeß besonders gut zu verarbeiten ist. Der Wert für die Intrinsische Viskosität (IV) des teilkristallinen PET liegt vorzugsweise zwischen 0,72 und 0,82.

In einem ersten Schritt des erfindungsgemäßen Verfahrens ist vorgesehen, dass in einer Kompoundiermaschine das PET mit Glasfasern weitestgehend homogen zu einem Granulat gemischt wird. Dieser Schritt kann extern, d.h. an einem anderen Ort als die nachfolgenden Verfahrensschritte, erfolgen.

Die Glasfasern bewirken eine Erhöhung der Festigkeit des fertigen Produkts, und es hat sich gezeigt, dass sie außerdem als Nukleierungsmittel für die Schaumausbreitung fungieren. Dabei bilden sich beim weiter unten beschriebenen chemischen Schäumen feine Gasbläschen an den Glasfasern, die damit weitestgehend gleichmäßig in der geschäumten Masse verteilt sind. Ein weiterer Vorteil der homogen in dem PET verteilten Glasfasern liegt darin, dass hierdurch die Ausleitung der Wärme beim Abkühlvorgang des Bauteils unterstützt wird, so dass die Zykluszeit der Herstellung eines geschäumten Großbauteils verringert ist.

Es ist bevorzugt, dass die Glasfasern eine Länge von ca. 2 mm bis 8 mm haben, vorzugsweise 3 mm bis 6 mm. Am besten bewährt hat sich eine Länge von 4 $\pm$ 1 mm. Nach der Herstellung des Granulats wird dieses auf eine minimale Restfeuchte getrocknet. Dabei ist bevorzugt, dass der Trocknungsvorgang über ca. 5 Stunden bei einer Temperatur von ca. 175 °C durchgeführt wird. Die verbleibende Restfeuchte beträgt erfindungsgemäß $\leq$ 0,003 %, im besten Fall 0,002 %. Diese Restfeuchte sollte nicht überschritten werden, da anderenfalls die gewünschten Festigkeitswerte nicht eingehalten werden und das Material des hergestellten Bauteils zu einer Versprödung neigen würde.

In dem nächsten Schritt des erfindungsgemäßen Verfahrens wird das Granulat und ein chemisches Treibmittel in eine Spritzgussmaschine eingeführt. Für den Einsatz bei PET sind nur wenige chemische Treibmittel zur Reduzierung der Rohmaterialdichte geeignet, da die jeweiligen Treibmittel einen großen Einfluss auf die Bauteilgewichte und die mögliche Festigkeit haben. Als bevorzugtes Treibmittel wird ein exothermes Treibmittel auf Basis von 5-Phenyltetrazol (5-PT) verwendet, welches als Treibmittelmasterbatch u.a. von den Firmen Tramaco/Tracel (IM 2240 LM) oder von Lehmann + Vos/Luvobatch (PE BA 9623) mit einem 20%igen Wirkstoffanteil und einem Polymerträger angeboten werden.

Bei der erfindungsgemäßen Material-Kombination beträgt der PET-Anteil 83 Gew.-% bis 91,5 Gew.-%, vorzugsweise ca. 85 Gew.-% bis ca. 91 Gew.-%, wobei die besten Ergebnisse bei 89 Gew.-% erhalten wurden. Um eine optimale Materialverarbeitung zu gewährleisten, beträgt der Glasfaseranteil erfindungsgemäß 8 Gew.-% bis 12 Gew.-%, bevorzugt 10 Gew.-%.

Der Treibmittelanteil beträgt 0,5 Gew.-% bis 1,5 Gew.-%, vorzugsweise ca. 0,8 Gew.-% bis ca. 1,2 Gew.-%

und am meisten bevorzugt 1 Gew.-% betragen, wobei das zugeführte Treibmittel bevorzugt einen Wirkstoffanteil von 20 % aufweist und in einem Träger-Polymer eingebettet ist. Mit einem derartigen Treibmittelanteil können besonders geringe Dichten bei gleichzeitig ausreichenden Festigkeitswerten erreicht werden, wobei dieser Wert jedoch auch von der Größe und Form des herzustellenden Bauteils abhängt.

Eine geeignete Massetemperatur im Zylinder der Spritzgußmaschine liegt zwischen 260 °C und 290 °C. besonders bevorzugt zwischen 265°C und 270°C, am besten bei 270°C in der Extruderschnecke. Die Werkzeugtemperatur wird bevorzugt auf ca. 50°C eingestellt.

Die passende Temperatur des dem Formwerkzeug zugeführten Kühlwassers liegt zwischen 10°C und 60°C, vorzugsweise bei 40°C.

Bei Einhaltung der obigen Parameter wird bei der Herstellung eines geschäumten Großbauteils wie eines Kabelschachtes mit einer maximalen Wandstärke zwischen 6 und 12 mm ein Bauteil mit einer amorphen Außenschicht und einer kristallinen Kernstruktur erzeugt, das eine ausreichende Schlagzähigkeit und Festigkeit hat, um für Kunststoffkabelschächte geeignet zu sein.

Dabei hat sich gezeigt, dass auch die Kühlzeit das Verhältnis von amorpher Außenschicht zu der kristallinen Kernstruktur beeinflusst. Für optimale Kühlzeit gilt die folgende Gleichung:

$$\text{Kühlzeit [in sec]} = (\text{max. Wandstärke [in mm]} \times 24) \pm 10\ \%$$

Durch das Aufschäumen mit einem chemischen Treibmittel können ca. 20 % Kunststoffmaterial eingespart werden. Bei dem Einspritzvorgang wird die Form des Formwerkzeugs vorteilhafterweise nur zu 80 % bis 95 %, vorzugsweise bis 90 % durch das zugeführte Material gefüllt, wobei der sich entwickelnde Schaum die Form vollständig füllt. Das fertige Produkt hat an der Außenseite eine feste, geschlossene Randschicht und in dem inneren Bereich eine Schaumstruktur.

Abhängig vom Glasfasergehalt und der Form und Größe des herzustellenden Bauteils betrug in Tests die Zykluszeit zwischen 200 Sekunden und 250 Sekunden.

Die Erfindung sieht somit die Bereitstellung einer neuen Materialkombination zur Herstellung komplexer und geschäumter Großbauteile im Spritzgießverfahren vor, wobei das eingesetzte PET wenigstes zu einem großen Teil aus recyceltem Material besteht. Es hat sich gezeigt, dass PET bei Verwendung eines geeigneten chemischen Treibmittels zur Herstellung von Kabelschächten sehr gut geeignet ist und bei verhältnismäßig geringen Herstellungskosten zu qualitativ hochwertigen Produkten führt.

**Patentansprüche**

1.  Verfahren zur Herstellung von vorzugsweise komplexen, geschäumten Großbauteilen wie Kabelschächten, enthaltend folgende Schritten:

    a) Herstellen eines homogenen Granulats durch Mischen von PET mit Glasfasern in einer Compoundiermaschine;
    b) Trocknen des Granulats auf eine Restfeuchte ≤ 0,003 %,
    c) Zuführen des Granulats und eines chemischen Treibmittels in eine Spritzgussmaschine;
    d) Spritzgießen des der Spritzgussmaschine zugeführten Materials in ein Formwerkzeug,
    wobei das Treibmittel während des Spritzgießens in dem Formwerkzeug reagiert und durch Erzeugung von Gasbläschen eine Schaumstruktur ausbildet und
    wobei der PET-Anteil der verwendeten Material-Kombination 83 Gew.-% bis 91,5 Gew.-%, der Glasfaseranteil 8 bis 12 Gew.-%, und der Treibmittelanteil 0,5 Gew.-% bis 1,5 Gew.-% betragen.

2.  Verfahren nach Anspruch 1,
    **dadurch gekennzeichnet,**
    **dass** der PET-Anteil vorzugsweise 85 bis 91 Gew.-%, am meisten bevorzugt 89 Gew.-% beträgt.

3.  Verfahren nach Anspruch 1 oder 2,
    **dadurch gekennzeichnet,**
    **dass** der Glasfaseranteil 10 Gew.-% beträgt.

4.  Verfahren nach einem der Ansprüche 1 bis 3,

**dadurch gekennzeichnet,**
**dass** der Treibmittelanteil vorzugsweise 0,8 Gew.-% bis 1,2 Gew.-%, am meisten bevorzugt 1,0 Gew.-% beträgt.

5. Verfahren nach einem der Ansprüche 1 bis 4,
   **dadurch gekennzeichnet,**
   **dass** das Treibmittel in einem Träger-Polymer eingebettet ist und das eingesetzte Treibmittel-Granulat einen Wirkstoffanteil von 20% aufweist.

6. Verfahren nach einem der Ansprüche 1 bis 5,
   **dadurch gekennzeichnet,**
   **dass** recyceltes PET verwendet wird, das bei der Wiederaufbereitung rekristallisiert wird.

7. Verfahren nach Anspruch 6,
   **dadurch gekennzeichnet,**
   **dass** der Wert für die Intrinsische Viskosität (IV) des PET zwischen 0,72 und 0,82 liegt.

8. Verfahren nach einem der Ansprüche 1 bis 7,
   **dadurch gekennzeichnet,**
   **dass** die Glasfasern eine Länge von 2 mm bis 8 mm, vorzugsweise 3 mm bis 6 mm, am meisten bevorzugt 4 ± 1 mm haben.

9. Verfahren nach einem der Ansprüche 1 bis 8,
   **dadurch gekennzeichnet,**
   **dass** als chemisches Treibmittel ein exothermes Treibmittel auf Basis von 5-Phenyltetrazol (5-PT) verwendet wird.

10. Verfahren nach einem der Ansprüche 1 bis 8,
    **dadurch gekennzeichnet,**
    **dass** Schritt b) über eine Zeitspanne von ca. 5 Stunden bei ca. 175 °C durchgeführt wird.

11. Verfahren nach einem der Ansprüche 1 bis 10,
    **dadurch gekennzeichnet,**
    **dass** die Restfeuchte des Schritts b) vorzugsweise 0,002 % beträgt.


**Claims**

1. A method of manufacturing preferably complex, foamed large scale components, such as cable ducts, including the following steps:

   a) producing a homogenous granulate by mixing PET with glass fibres in a compounding machine;
   b) drying the granulate to a residual moisture content $\leq 0.003$ %,
   c) supplying the granulate and a chemical blowing agent into an injection moulding machine;
   d) injection moulding the material supplied to the injection moulding machine in a moulding tool, wherein the blowing agent reacts in the molding tool during the injection moulding process and forms a foam structure by producing gas bubbles and
   wherein the PET content in the material combination used is 83 wt.% to 91.5 wt.%, the glass fibre content is 8 to 12 wt.% and the blowing agent content is 0.5 wt.% to 1.5 wt.%.

2. A method as claimed in Claim 1, **characterised in that** the PET content is preferably 85 to 91 wt.%, most preferably 89 wt.%.

3. A method as claimed in Claim 1 or 2, **characterised in that** the glass fibre content is 10 wt.%.

4. A method as claimed in one of Claims 1 to 3, **characterised in that** the blowing agent content is preferably 0.8 wt.% to 1.2 wt.%, most preferably 1.0 wt.%.

5. A method as claimed in one of Claims 1 to 4, **characterised in that** the blowing agent is embedded in a carrier polymer and the blowing agent-granulate used has an active substance content of 20%.

**6.** A method as claimed in one of Claims 1 to 5, **characterised in that** recycled PET is used, which is recrystallised in the recycling process.

**7.** A method as claimed in Claim 6, **characterised in that** the value for the intrinsic viscosity (IV) of the PET is between 0.72 and 0.82.

**8.** A method as claimed in one of Claims 1 to 7, **characterised in that** the glass fibres have a length of 2 mm to 8 mm, preferably 3 mm to 6 mm, most preferably 4 + 1 mm.

**9.** A method as claimed in one of Claims 1 to 8, **characterised in that** an exothermic blowing agent on the basis of 5-phenyl tetrazole (5-PT) is used as the chemical blowing agent.

**10.** A method as claimed in one of Claims 1 to 8, **characterised in that** step b) is performed over a period of time of ca. 5 hours at ca. 175°C.

**11.** A method as claimed in one of Claims 1 to 10, **characterised in that** the residual moisture content of step b) is preferably 0.002 %.


**Revendications**

**1.** Procédé de fabrication de composants de grande taille expansés, de préférence complexes comme des passe-câbles,
contenant les étapes suivantes :

a) de fabrication d'un granulé homogène par mélange de PET avec des fibres de verre dans une machine de composition ;
b) de séchage du granulé à une humidité résiduelle ≤ 0,003 %,
c) d'amenée du granulé et d'un agent propulseur chimique dans une machine de moulage par injection ;
d) de moulage par injection du matériau amené à la machine de moulage par injection dans un outil de moulage, dans lequel l'agent propulseur réagit pendant le moulage par injection dans l'outil de moulage et forme une structure expansée par génération de bulles de gaz et
dans lequel la part de PET de la combinaison de matériau utilisée est de 83 % en poids à 91,5 % en poids, la part de fibres de verre est de 8 à 12 % en poids, et la part d'agent propulseur est de 0,5 % en poids à 1,5 % en poids.

**2.** Procédé selon la revendication 1,
**caractérisé en ce**
**que** la part de PET est de préférence de 85 à 91 % en poids, le plus préférablement de 89 % en poids.

**3.** Procédé selon la revendication 1 ou 2,
**caractérisé en ce**
**que** la part de fibres de verre est de 10 % en poids.

**4.** Procédé selon l'une quelconque des revendications 1 à 3,
**caractérisé en ce**
**que** la part d'agent propulseur est de préférence de 0,8 % en poids à 1,2 % en poids, le plus préférablement de 1,0 % en poids.

**5.** Procédé selon l'une quelconque des revendications 1 à 4,
**caractérisé en ce**
**que** l'agent propulseur est incorporé dans un polymère support et le granulé d'agent propulseur employé présente une part de substance active de 20 %.

**6.** Procédé selon l'une quelconque des revendications 1 à 5,
**caractérisé en ce**
**que** du PET recyclé est utilisé, qui est recristallisé lors du recyclage.

**7.** Procédé selon la revendication 6,

**caractérisé en ce**
**que** la valeur de la viscosité intrinsèque (IV) du PET se situe entre 0,72 et 0,82.

8. Procédé selon l'une quelconque des revendications 1 à 7,
    **caractérisé en ce**
    **que** les fibres de verre ont une longueur de 2 mm à 8 mm, de préférence de 3 mm à 6 mm, le plus préférablement de 4 $\pm$ 1 mm.

9. Procédé selon l'une quelconque des revendications 1 à 8,
    **caractérisé en ce**
    **qu'**un agent propulseur exotherme à base de 5-phényltétrazole (5-PT) est utilisé en tant qu'agent propulseur chimique.

10. Procédé selon l'une quelconque des revendications 1 à 8,
    **caractérisé en ce**
    **que** l'étape b) est réalisée sur une durée d'environ 5 heures à environ 175 °C.

11. Procédé selon l'une quelconque des revendications 1 à 10,
    **caractérisé en ce**
    **que** l'humidité résiduelle de l'étape b) est de préférence de 0,002 %.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 101280095 A
- WO 2017037621 A1